# EUROPEAN PATENT APPLICATION

(11) **EP 3 012 131 A2**
(43) Date of publication of application: **27.04.2016**
(21) Application number: 15188070.5
(22) Date of filing: 02.10.2015
(51) Int. Cl.: B60D 1/62, A01B 59/06

(54) **COUPLING ASSEMBLY FOR COUPLING A TOWED IMPLEMENT TO A VEHICLE**

(30) Priority: 22.10.2014 US 201414520692
(71) Applicant: Deere & Company, Moline, IL 61265 (US)
(72) Inventor: Huegerich, Tony J, Cedar Falls, IA 50613 (US); Duppong, Steven A, Cedar Falls, IA 50613 (US)
(74) Representative: Dehnhardt, Florian Christopher

(57) **Abstract**

A coupling assembly (10) for coupling a towed implement to a vehicle. The coupling assembly (10) comprises a housing member (12) which can be mounted to the vehicle. The housing member (12) supports at least one vehicle coupler. A coupler frame (19) can be fixedly attached to the implement. A coupler plate (18) is movably coupled to the coupler frame (19). The coupler plate (18) supports at least one implement coupler (20) for mating engagement with the vehicle coupler.

## Description

The present invention relates to a coupling assembly for coupling a towed implement to a vehicle.

Tractors and utility vehicles used for agricultural work may be coupled to implements which have a variety of couplers and/or connectors which must be connected to corresponding tractor couplers and/or connectors. Hooking up a drawbar, PTO (power take-off), hydraulic and electrical connections between a tractor and an implement can take significant time because of the multiple trips required from the cab and the many connections to make. With multiple connections also comes the risk of hooking them up incorrectly which could cause damage or increase implement set up time. The time spent connecting the implement could be better used doing productive work in the field. Implements are not utilized full time with a tractor, so it is desirable that a coupling assembly allows quick, easy removal and reinstallation of the implement. Thus, an automatic coupling assembly is needed for an implement that can be quickly and easily connected and disconnected under a tractor.

These and other objects are achieved by the present invention, wherein a coupling assembly for coupling a towed implement to a vehicle is provided. The coupling assembly comprises a housing member which can be mounted to the vehicle. The housing member supports at least one vehicle coupler. A coupler frame can be fixedly attached to the implement. A coupler plate is movably coupled to the coupler frame . The coupler plate supports at least one implement coupler for mating engagement with the vehicle coupler.

For a complete understanding of the objects, techniques, and structure of the invention reference should be made to the following detailed description and accompanying drawings:
- Fig. 1: is a side view of a coupling assembly embodying the invention,
- Fig. 2: is a perspective view of the coupling assembly of Fig. 1,
- Fig. 3: is a perspective view of a implement coupler portion of the coupling assembly of Fig. 1,
- Fig. 4: is a sectional view the coupling assembly of Fig. 2,
- Fig. 5: is a side view of the coupling assembly of Fig. 1 in an initial coupling condition,
- Fig. 6: is a side view of the coupling assembly of Fig. 1 in a fully coupled condition,
- Fig. 7: is a perspective view of the coupling assembly of Fig. 1 coupled to a pickup hitch, and
- Fig. 8: is another perspective view of the coupling assembly of Fig. 1 coupled to a pickup hitch.

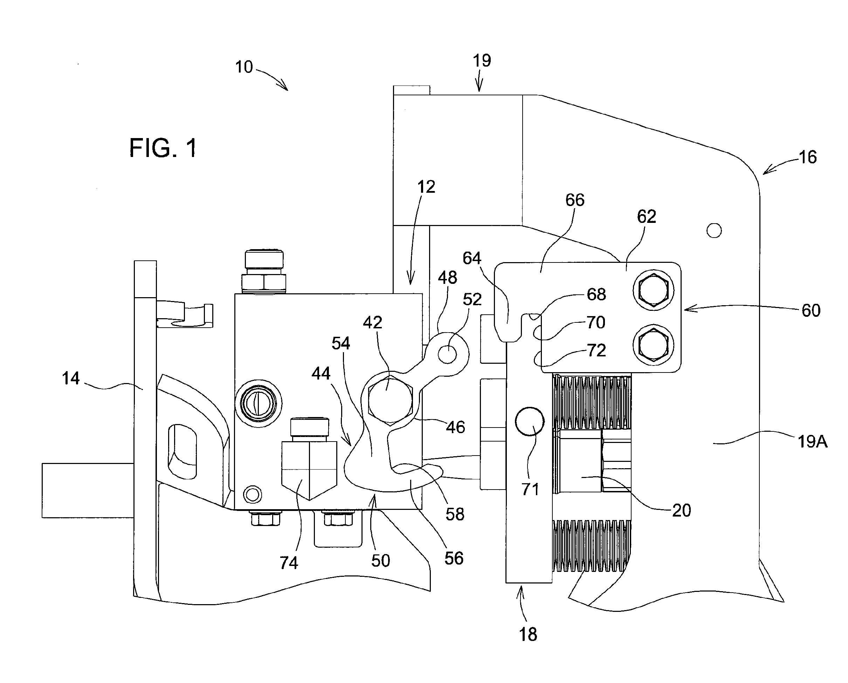

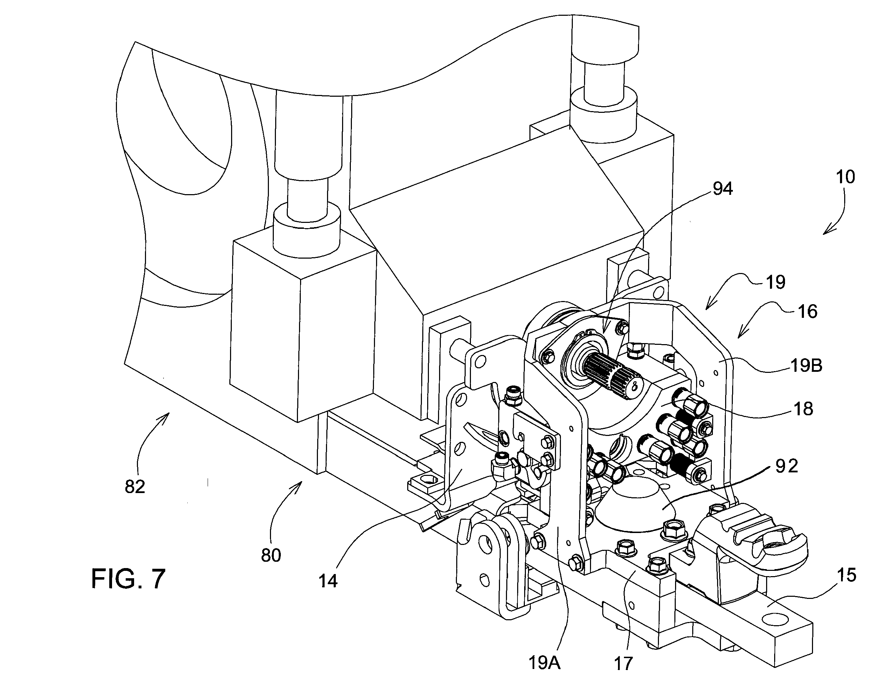

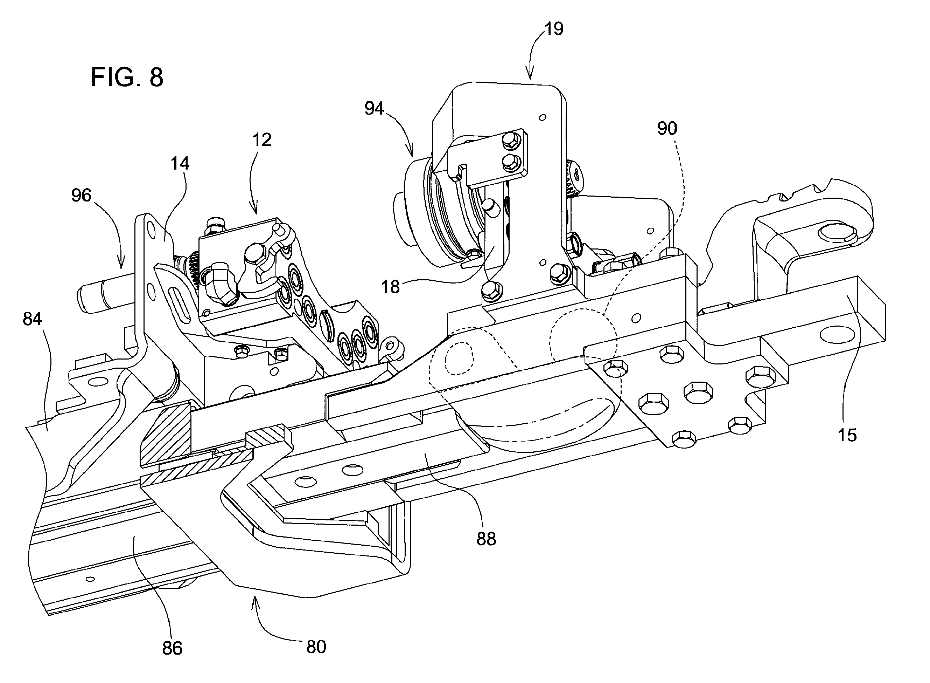

Referring to Figs. 1 to 4, a coupling assembly 10 is provided for coupling a towed implement to a vehicle or prime mover, in the present embodiment to a tractor used for agricultural work. A manifold or housing member 12 is mounted to a plate 14. Plate 14 is mounted on an outer housing 84 of a pickup hitch 80 of the tractor (see Figs. 7 and 8). An implement coupler unit 16 is fixed to a tongue 15 of the implement. The implement coupler unit 16 includes a base 17 and a coupler frame 19 with coupler frame arms 19A and 19B attached to sides of the base 17.

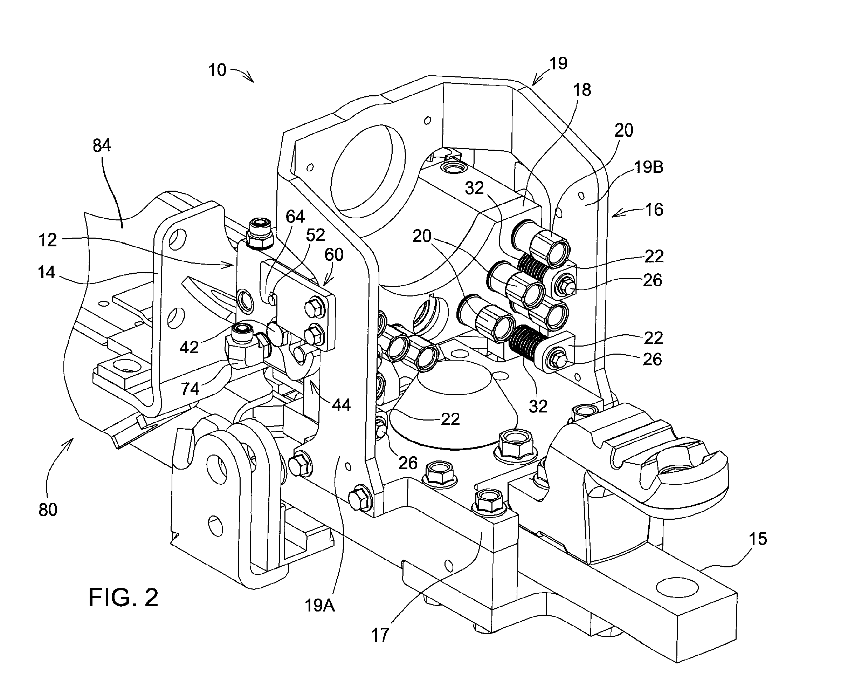

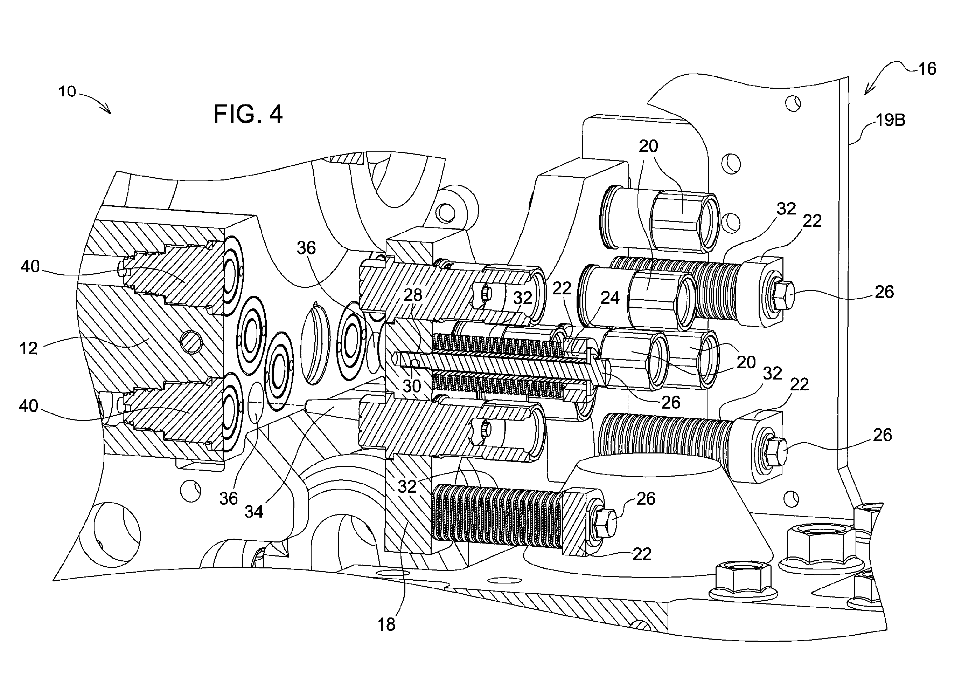

An implement plate or coupler plate 18 is movably supported on the coupler frame 19. One or more hydraulic and/or electric implement couplers 20 are installed in the coupler plate 18. As best seen in Figs. 2 and 4, support brackets 22 project inwardly from the coupler frame arms 19A and 19B. Each bracket 22 has a bore 24 which receives a support bolt 26. Each support bolt 26 has a threaded end 28 which is threadably received by a corresponding threaded bore 30 in the coupler plate 18. A resilient spring member 32, such as a coil spring, is mounted around each support bolt 26, between the coupler plate 18 and each bracket 22. Each resilient spring member 32 is biased to urge the coupler plate 18 towards the housing member 12. Alignment dowels 34 project from the coupler plate 18 towards the housing member 12 and are received by alignment bores 36 formed in the housing member 12. The housing member 12 supports tractor couplers 40 which are matingly engagable with the implement couplers 20. The implement coupler unit 16 may be pulled towards the housing member 12 by a conventional pickup hitch 80 (see Figs. 7 and 8).

As best seen in Fig. 1, a pivot pin 42 projects laterally from a side of the housing member 12. A lever member 44 is pivotally mounted on the pivot pin 42. The lever member 44 has a hub 46 which rotatably receives the pivot pin 42, a first arm 48 projecting away from the hub 46, and a second arm 50 projecting away from the hub 46. The lever member 42 also has a latch pin 52 which projects laterally away from an outer end of the first arm 48. The second arm 50 includes a first leg 54 which is joined to the hub 46 and a second leg 56 which extends away from the first leg 54. The first and second legs 54 and 56 are angled with respect to each other to form a locking recess 58.

Also as best seen in Fig. 1, a latch member 60 is fixed, such as by bolts, to the implement coupler unit 16. The latch member 60 has a body 62, a latch finger 64 spaced apart from the body 62, and a spacer 66 which connects the latch finger 64 to the body 62. The body 62, the latch finger 64 and the spacer 66 form a slot 68 therebetween. The body 62 forms a slot wall 70 which is spaced apart from the latch finger 64 and which faces the latch finger 64. The body 62 also forms a latch wall 72 which is joined to the slot wall 70. A lock pin 71 projecting laterally from the coupler plate 18.

As best seen in Figs. 1 and 2, a stop member 74 is formed by a hydraulic fitting which is attached to the housing member 12 spaced apart from the pivot pin 42. The lever member 44 has an uncoupled position wherein gravity moves the first arm 48 towards the latch member 60 and moves the second arm 50 into engagement with the stop member 74.

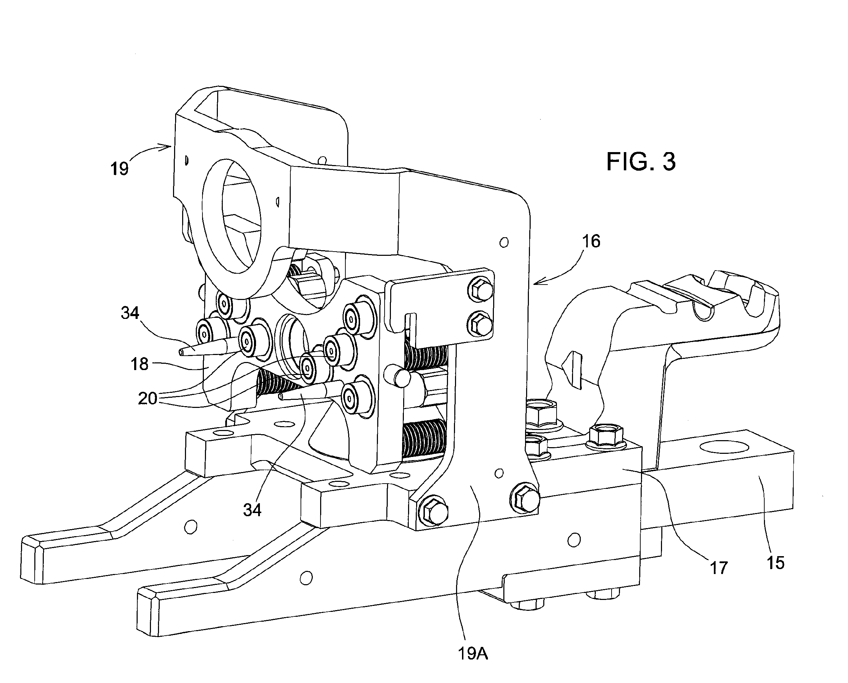

As best seen in Figs. 3 and 4, a pair of alignment dowels 34 projects from the coupler plate 18. The housing member 12 includes alignment bores 36 which receive the alignment dowels 34.

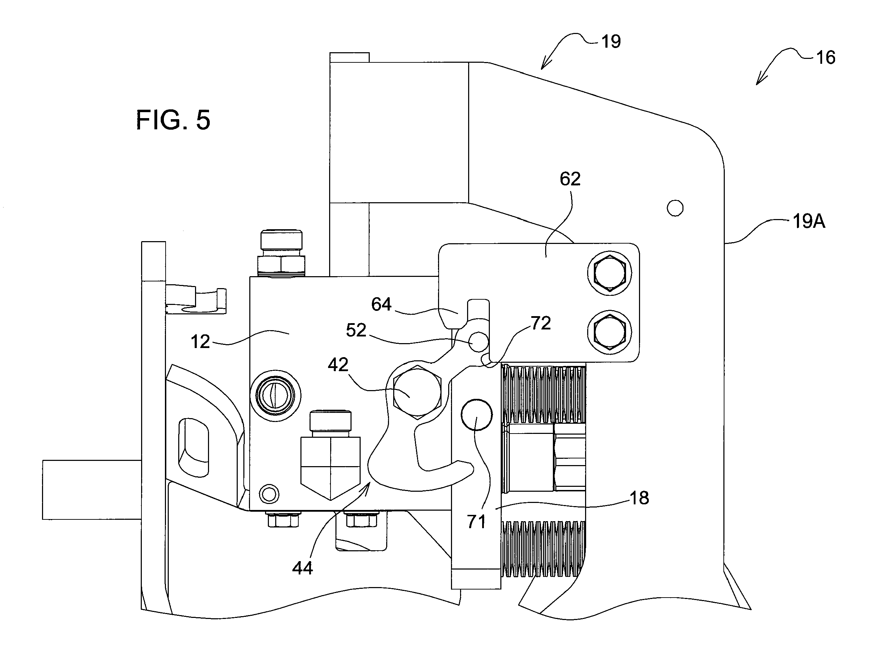

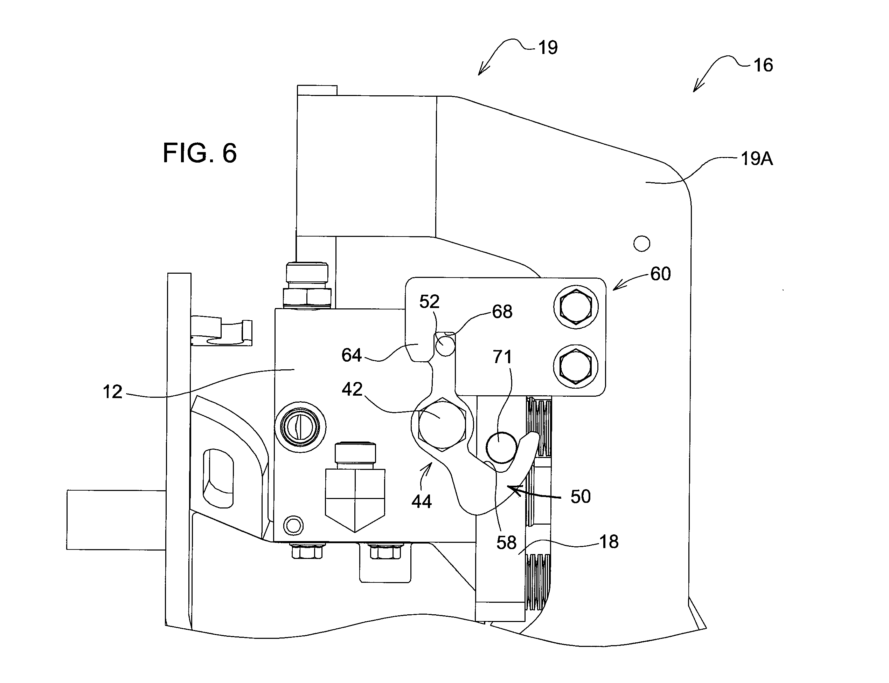

As best seen in Figs. 5 and 6, the latch wall 72 engages the latch pin 52 and pivots the lever member 44 and moves the latch pin 52 into the slot 68 as the implement coupler unit 16 moves towards the housing member 12. Also, the second arm 50 moves to a locking position wherein the locking recess 58 receives the lock pin 71 as the lever member 44 is pivoted by the latch member 60.

Referring to Figs. 7 and 8, the tractor pickup hitch 80 is mounted at the rear of a tractor frame part 82. The pickup hitch 80 supports the coupling assembly 10 which includes the plate 14 and the implement coupler unit 16. The pickup hitch 80 includes a fixed outer housing 84, a pivotal inner housing 86 and a drawbar 88 which is slidably received in the inner housing 86. A hitch ball 90 at the end of the drawbar 88 is received by a downward opening socket 92 which is formed by the base 17. The coupler frame 19 supports an implement PTO coupler member 94 which is releasably engagable with a vehicle PTO device 96.

The result is a coupling assembly 10 which can automatically connect and lock flat face hydraulic quick couplers 20 and 40 together using a conventional production pickup hitch 80 without leaving the tractor cab. The hydraulic cylinder of a production pickup 80 hitch brings the hydraulic flat face quick couplers 20 and 40 together so that the coupling assembly 10 automatically mechanically locks the hydraulic flat face quick couplers 20 and 40 together. A coupler plate 18 supports the implement couplers 20 facing a housing member 12 which is attached to a plate 14 of the pickup hitch 80. Resilient spring members 32 movably hold the coupler plate 18 to a coupler frame 19 which is fixed to the implement. As the hydraulic cylinder of the pickup hitch 80 pulls the coupler frame 19 to the tractor, the coupler plate 18 contacts the housing member 12. The hydraulic cylinder continues to pull the coupler frame 19 towards the tractor, compressing the resilient spring members 32 and preventing damage to the hydraulic flat face quick couplers 20 and 40. This coupling assembly 10 complete the connection of the drawbar 88, PTO, hydraulic and electrical connections without requiring the operator to leave the cab.

## Claims

1. A coupling assembly for coupling a towed implement to a vehicle, the coupling assembly (10) comprising a housing member (12) which can be mounted to the vehicle, the housing member (12) supporting at least one vehicle coupler (40); a coupler frame (19) which can be fixedly attached to the implement; and a coupler plate (18) movably coupled to the coupler frame (19), the coupler plate (18) supporting at least one implement coupler (20) for mating engagement with the vehicle coupler (40).

2. The coupling assembly according to claim 1, **characterized in that** the coupler frame (19) supports an implement PTO coupler member (94) which is releasably engagable with a vehicle PTO device (96).

3. The coupling assembly according to claim 1 or 2, **characterized in that** the housing member (12) is engagable with the coupler plate (18).

4. The coupling assembly according to at least one of claims 1 to 3, **characterized in that** a support bracket (22) projects from the coupler frame (19), the support bracket (22) having a bore (24) extending therethrough, a support bolt (26) is slidably received by the support bracket (22), an end of the support bolt (26) is attached to the coupler plate (18), and a resilient spring member (32) is biased to urge the coupler plate (18) towards the housing member (12).

5. The coupling assembly according to claim 4, **characterized in that** the resilient spring member (32) is mounted around the support bolt (26).

6. The coupling assembly according to at least one of claims 1 to 3, **characterized by** further comprising a plurality of support brackets (22) mounted to the coupler frame (19), each of the support brackets (22) having a bore (24) extending therethrough, a plurality of support bolts (26), each of the support bolts (26) being slidably received by a corresponding support bracket (22), an end of each of the support bolts (26) being attached to the coupler plate (18), and a plurality of resilient spring members (32), each of the resilient spring members (32) being biased to urge the coupler plate (18) towards the housing member (12).

7. The coupling assembly according to claim 6, **characterized in that** each of the resilient spring members (32) is mounted around a corresponding one of the support bolts (26).

8. The coupling assembly according to at least one of claims 4 to 7, **characterized in that** each resilient spring member (32) comprises a coil spring.
